# EUROPEAN PATENT SPECIFICATION

(11) **EP 3 126 643 B1**
(45) Date of publication and mention of the grant of the patent: **03.01.2018**
(21) Application number: 15708558.0
(22) Date of filing: 18.02.2015
(51) Int. Cl.: F01L 9/02

(54) **GAS EXCHANGE VALVE ARRANGEMENT**
GASWECHSELVENTILANORDNUNG
AGENCEMENT DE SOUPAPE D'ÉCHANGE DE GAZ

(30) Priority: 06.03.2014 FI 20145213
(43) Date of publication of application: 08.02.2017
(73) Proprietor: Wärtsilä Finland Oy, 65380 Vaasa (FI)
(72) Inventor: SUNDSTEN, Magnus, FI-65100 Vaasa (FI); NIINIKANGAS, Saku, FI-65100 Vaasa (FI)
(74) Representative: Berggren Oy, Helsinki & Oulu
(86) International application number: PCT/FI2015/050098
(87) International publication number: WO 2015/132457

(56) References cited:
- WO-A1-2013/121100
- DE-A1- 3 739 775
- DE-A1- 19 544 473
- US-A- 4 791 895
- US-A- 5 022 358
- US-A- 5 253 619

## Description

### Technical field of the invention

The present invention relates to a gas exchange valve arrangement for a piston engine in accordance with the preamble of claim 1.

### Background of the invention

Very high charge pressures are used in modern compression ignition internal combustion engines to achieve better fuel efficiency. High charge pressures are advantageously accompanied with Miller timing, where intake valves are closed well before bottom dead center during the intake stroke. Miller timing reduces cylinder temperature during combustion and helps to achieve lower NOx emissions. Since all the gas exchange valves are closed when the piston is still moving downwards, the cylinder pressure at the end of the intake phase might be significantly lower than the pressure in the air intake duct. A problem with large pressure differences over the intake valves is that standard valve springs have been designed for smaller pressure differences and the intake valves tend to open. A similar problem is encountered with the exhaust valves. Since a high charge pressure increases also the pressure in the exhaust manifold, greater force is needed for keeping the exhaust valves closed at the end of the suction stroke and at the beginning of the compression stroke. An obvious solution for solving this problem would naturally be the use of stiffer valve springs. However, this is often not possible without significant modifications to the cylinder head. In many cases it would be very difficult or even impossible to redesign the cylinder head so that it could accommodate the larger springs needed to withstand the large pressure differences over the gas exchange valves.

One option for reducing the force the valve springs need to carry is to use air springs to assist conventional mechanical springs.

Patent document US 6745738 B1 discloses a valve spring device using pressurized gas for biasing a gas exchange valve. The device comprises a dynamic housing having a chamber into which pressurized gas can be communicated so that the dynamic housing moves away from a static housing moving the attached valve. The device uses a separate pressure source and control means for controlling the flow of the pressurized gas into the dynamic chamber and out of the chamber.

Patent document US 5988124 A discloses an electromagnetically actuated cylinder valve having pneumatic resetting springs. The valve is opened and closed by means of electromagnetic actuators. The arrangement also comprises a mechanical spring for closing the valve when the gas springs are in a depressurized state.

Patent application GB 2326444 A discloses another electro-pneumatically actuated gas exchange valve. The system may also employ a mechanical spring for closing the valve when the electro-pneumatic means are not activated. Control means and a separate compressor for regulating the pressure in the gas springs are needed.

Patent document US 5253619 A discloses a hydraulically powered actuator with a pneumatic spring and hydraulic latching. The actuator comprises a pneumatic piston and a hydraulic piston arranged on a common shaft with an engine valve. The pneumatic piston is moved between two positions primarily by a double acting pneumatic spring. The closing movement of the engine valve is assisted by hydraulic pressure. Hydraulic fluid is used to latch the engine valve in an open position.

A drawback of the air springs is that only a limited closing force can be achieved without using very large air springs and/or very high pressures. The size of the valve springs can thus in practice be reduced only to a certain extent. In addition, a source of pressurized air is needed for operating the air springs.

### Summary of the invention

An object of the present invention is to provide an improved gas exchange valve arrangement for a piston engine. The characterizing features of the gas exchange valve arrangement according to the invention are given in the characterizing part of claim 1.

The arrangement according to the invention comprises a gas exchange valve and a spring, such as a helical spring or a pneumatic spring, exerting a force on the gas exchange valve for closing the valve. The arrangement further comprises a hydraulic fluid chamber, a locking piston that is attached to the gas exchange valve and provided with a piston surface delimiting the hydraulic fluid chamber and facing towards the opening direction of the gas exchange valve, means for introducing hydraulic fluid into the hydraulic fluid chamber, and means for preventing outflow from the hydraulic fluid chamber when the gas exchange valve is closed.

With the arrangement according to the invention, smaller valve springs can be used without the risk that the gas exchange valves open due to pressure differences over the valves. Since less stiff springs can be used, energy losses of the valve opening system are reduced. Especially in electro-hydraulic valve systems the energy consumption can be reduced significantly. Because the hydraulic fluid is trapped within the hydraulic fluid chamber, the pressure of the hydraulic fluid does not need to be high. Consequently, for instance lube oil of the engine can be used as the hydraulic fluid.

The locking piston can be arranged, for instance, around the valve stem of the gas exchange valve or it can be connected to the end of the valve stem. The locking piston can be a separate part, or it can be integrated to a driven piston, which is attached to the gas exchange valve for hydraulically opening the valve.

The means for preventing outflow from the hydraulic fluid chamber can comprise a locking valve, which is arranged to selectively prevent and allow flow in a hydraulic duct that is connected to the hydraulic fluid chamber. The locking valve can be controlled electrically, pneumatically or hydraulically.

The locking valve can be configured to increase pressure in the hydraulic fluid chamber, when the locking valve is moved towards the closed position, for instance by compressing fluid in the hydraulic duct. By this arrangement, it is ensured that the gas exchange valves are kept tightly closed even in the case the initial pressure of the hydraulic fluid is very low.

There are many different possibilities for arranging the control of a hydraulically controlled locking valve.

### Brief description of the drawings

Embodiments of the invention are described below in more detail with reference to the accompanying drawings, in which
Fig. 1 shows a gas exchange valve arrangement according to an embodiment of the invention when the gas exchange valves are locked in the closed position,
Fig. 2 shows the arrangement of Fig. 1 when the gas exchange valves are not locked,
Fig. 3 shows a gas exchange valve arrangement according to a second embodiment of the invention,
Fig. 4 shows a gas exchange valve arrangement according to a third embodiment of the invention,
Fig. 5 shows a gas exchange valve arrangement according to a fourth embodiment of the invention,
Fig. 6 shows a gas exchange valve arrangement according to a fifth embodiment of the invention,
Fig. 7 shows a gas exchange valve arrangement according to a sixth embodiment of the invention,
Fig. 8 shows a gas exchange valve arrangement according to a seventh embodiment of the invention, and
Fig. 9 shows a gas exchange valve arrangement according to an eight embodiment of the invention.

### Description of embodiments of the invention

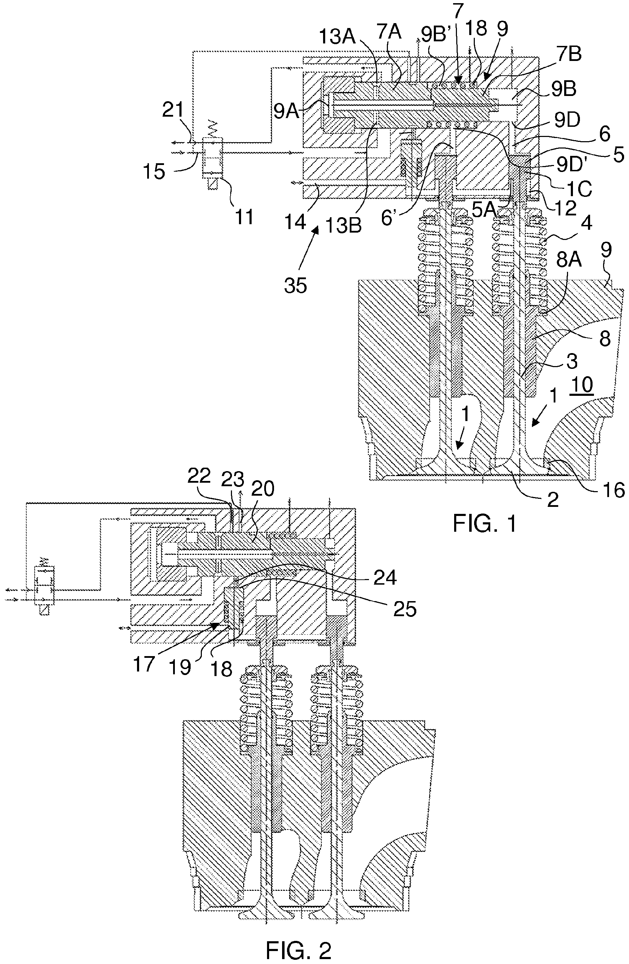

In Figures 1 and 2 is shown a simplified cross-sectional view of part of a cylinder head 9 of a large internal combustion engine and a gas exchange valve arrangement according to an embodiment of the invention. The engine could be, for instance, a main or an auxiliary engine of a ship or a power plant engine. The engine is supercharged for achieving high intake air pressure. For instance two turbo-chargers that are connected in series can be used, each of the turbo-chargers comprising a turbine and a compressor. The engine preferably comprises a plurality of cylinders and each of the cylinders is provided with its own cylinder head 9. The cylinders can be arranged for instance in line or in a V-configuration. An intake duct 10 is arranged in the cylinder head 9 for introducing pressurized charge air into the cylinder. An exhaust duct (not shown) is arranged in the cylinder head 9 for guiding exhaust gas out of the cylinder. The intake duct 10 and the exhaust duct continue outside the cylinder head 9 and are connected to the compressors and turbines of the turbo-chargers, respectively. The cylinder head 9 is provided with intake valves 1 for opening and closing fluid communication between the intake duct 10 and the cylinder, and with exhaust valves for opening and closing fluid communication between the exhaust duct and the cylinder. Together the intake valves 1 and the exhaust valves can be referred to as gas exchange valves. Each cylinder of the engine is preferably provided with two intake valves 1 and two exhaust valves. Of course, the number of the gas exchange valves could also be different. Although embodiments of the invention are described below with reference to intake valves 1, the invention is also applicable to exhaust valves.

The intake valve 1 comprises a valve head 2 and a valve stem 3. The valve stem 3 is integrated to the valve head 2 and extends away from the cylinder. The valve stem 3 is needed for moving the intake valve 1 in a reciprocating manner for opening and closing the fluid communication between the cylinder and the intake duct 10. When the intake valve 1 is closed, the valve head 2 forms a gas tight connection with a valve seat 16, which is arranged in the cylinder head 9. The cylinder head 9 is provided with a valve guide 8 for supporting the intake valve 1 in the radial direction. The valve guide 8 is a cylindrical part, inside which the valve stem 3 can reciprocate. The valve guide 8 is a separate part, which is attached to the cylinder head 9 for example with a shrink fit. The valve guide 8 is provided with a protrusion 8A, which supports the valve guide 8 against the cylinder head 9 in axial direction. Since the valve guide 8 is a separate part, it can be made of a different material than the cylinder head 9. This allows the material of the valve guide 8 to be chosen so that the wear resistance and friction properties of the valve guide 8 are suitable for accommodating the reciprocating intake valve 1. The intake valve 1 is provided with a valve spring 4, which creates a force with a direction away from the cylinder. The force tends to close the intake valve 1 and keep it closed. The valve spring 4 is arranged around the valve stem 3. In the embodiment of the figures, the valve spring 4 is a helical spring. The valve spring 4 can be, for instance, a steel spring.

In the embodiment of figures 1 and 2, the intake valves 1 are electro-hydraulically operated. For operating the intake valves 1, the engine comprises a hydraulic actuator 35 for the intake valves 1 of each cylinder of the engine. The hydraulic actuator 35 comprises a pressurizing chamber 9, in which a drive piston 7 is arranged. The drive piston 7 divides the pressurizing chamber 9 into at least one input portion 9A and at least one output portion 9B, 9B'. In the embodiment of figure 1, the pressurizing chamber 9 is divided into one input portion 9A and into a first and a second output portion 9B, 9B'. The drive piston 7 can reciprocate in the pressurizing chamber 9. When pressure medium is introduced into the input portion 9A of the pressurizing chamber 9, the drive piston 7 pressurizes hydraulic fluid on the output side 9B, 9B' of the pressurizing chamber 9. A returning spring 18 is arranged in the pressurizing chamber 9 for pushing the drive piston 7 towards the input portion 9A of the pressurizing chamber 9. However, the return stroke of the drive piston 7 could also be implemented by introducing hydraulic fluid into the output portion 9B, 9B' of the pressurizing chamber 9. The hydraulic actuator 35 comprises a hydraulic valve 11 for opening and closing flow communication between a pressure source, such as a hydraulic pump, and the input portion 9A of the pressurizing chamber 9. The hydraulic valve 11 also selectively prevents and allows outflow from the input portion 9A of the pressurizing chamber 9. The hydraulic valve 11 is arranged between the pressure source and the input portion 9A of the pressurizing chamber 9. In a first position of the hydraulic valve 11, flow from an inlet duct 15 into the input portion 9A of the pressurizing chamber 9 is allowed and flow from the input portion 9A into an outlet duct 21 is prevented, as shown in figure 2. In a second position of the hydraulic valve 11, flow from the inlet duct 15 into the input portion 9A of the pressurizing chamber 9 is prevented and flow from the input portion 9A into the outlet duct 21 is allowed, as shown in figure 1. The same hydraulic valve 11 is thus used for controlling valve opening and closing timing of both intake valves 1. The hydraulic actuator 35 further comprises fluid outlets 9D, 9D' for supplying hydraulic fluid from the output portions 9B, 9B' of the pressurizing chamber 9 to the intake valves 1.

A driven piston 1C is arranged in mechanical connection with the valve stem 3 of each intake 1. The intake valve 1 is thus moved together with the driven piston 1C. The driven piston 1C is arranged in a receiving chamber 5 that is in fluid communication with the output portion 9B, 9B' of the pressurizing chamber 9. The first output portion 9B of the pressurizing chamber 9 is connected with a first connecting duct 6 to the receiving chamber 5 of a first intake valve 1, and the second output portion 9B' of the pressurizing chamber 9 is connected with a second connecting duct 6' to the receiving chamber 5 of a second intake valve 1. Since the hydraulic actuator 35 is provided with an own output portion 9B, 9B' for each of the intake valves 1, the pressurized hydraulic fluid is supplied simultaneously to both intake valves 1.

When hydraulic fluid is introduced into the input portion 9A of the pressurizing chamber 9, the drive piston 7 moves and pressurizes hydraulic fluid in the output portions 9B, 9B' of the pressurizing chamber 9. From the output portions 9B, 9B' of the pressurizing chamber 9, the hydraulic fluid flows into the receiving chambers 5 and the intake valves 1 are opened. When hydraulic fluid is released from the input portion 9A of the pressurizing chamber 9, the drive piston 7 can be moved backwards by the returning spring 18. Hydraulic fluid can thus flow from the receiving chambers 5 back into the output portions 9B, 9B' of the pressurizing chamber 9 and the intake valves 1 can be closed by the valve springs 4.

The output portion end of the drive piston 7 is formed of a solid cylindrical part 7B and the input portion end of the drive piston 7 is formed of a hollow cylindrical part 7A. The input portion end of the solid cylinder 7A forms a surface onto which the pressure of the hydraulic fluid is applied. The hydraulic fluid is introduced into the input portion 9A of the pressurizing chamber 9 through the sleeve of the hollow cylinder 7A. The sleeve is therefore provided with at least one opening, which comprises a groove 13A and a drilling 13B. In the embodiment of figure 1, two drillings 13B are in connection with the groove 13A. Because of the groove 13A that is arranged around the whole outer circumference of the hollow cylinder 7A, flow through the drillings 13B is allowed in any angular position of the drive piston 7.

For preventing unintentional opening of the intake valves 1 even in case there is a big pressure difference over the intake valves 1, the gas exchange valve arrangement according to the invention is provided with a locking piston for each intake valve 1. The locking piston is fixed to the intake valve 1 and therefore moves with the intake valve 1. In the embodiment of figures 1 and 2, the driven piston 1C, which is used for opening the intake valve 1, works also as the locking piston. The locking piston 1C is in a mechanical connection with the intake valve 1. In the embodiment of figures 1 and 2, the locking piston 1C is arranged at the end of the valve stem 3. The locking piston 1C is arranged in a hydraulic fluid chamber 12, and it is provided with a piston surface 5A, which delimits the hydraulic fluid chamber 12. The piston surface 5A faces towards the opening direction of the intake valves 1, i.e. towards the cylinder of the engine. The gas exchange valve arrangement comprises a hydraulic duct 14, which works as a means for introducing hydraulic fluid into the hydraulic fluid chamber 12. The hydraulic fluid is liquid. Through the hydraulic duct 14, hydraulic fluid can also be discharged from the hydraulic fluid chamber 12. The arrangement could also be provided with separate ducts for introducing hydraulic fluid into the hydraulic fluid chamber 12 and for discharging fluid from the chamber 12. The gas exchange valve arrangement further comprises means for preventing outflow from the hydraulic fluid chamber 12 when the intake valve 1 is closed. By preventing outflow from the hydraulic fluid chamber 12, the movement of the locking piston 1C is prevented. Since the locking piston 1C is attached to the intake valve 1, opening of the intake valve 1 is also prevented. Because the locking piston 1C is prevented from moving by trapping the hydraulic fluid in the hydraulic fluid chamber 12, high-pressure is not needed for preventing the opening of the intake valve 1. Therefore, for instance lube oil of the engine can be used as the hydraulic fluid. The pressure can be in the range of 2 to 5 bar.

In the embodiment of figures 1 and 2, the means for preventing outflow from the hydraulic fluid chamber 12 comprise a locking valve 17. The locking valve 17 is arranged in the hydraulic duct 14. Figure 1 shows the locking valve 17 in a first position, in which the flow in the hydraulic duct 14 is prevented. In figure 2, the locking valve 17 is in a second position, in which flow in the hydraulic duct 14 is allowed. The locking valve 17 comprises a movable spindle 19, which opens and closes the fluid communication into the hydraulic fluid chamber 12 and out of it. A spring 18 is arranged to push the spindle 19 towards the open position of the locking valve 17. The opening and closing of the locking valve 17 is controlled by the drive piston 7 of the hydraulic actuator 35. The outer surface of the hollow cylinder 7A of the drive piston 7 is provided with a control groove 20. When the drive piston 7 is at the input portion end of the pressurizing chamber 9, the control groove 20 is connected via an inlet duct 22 to a pressure medium source. In the embodiment of figures 1 and 2, the control groove 20 is connected to the inlet duct 15 of the hydraulic actuator 35 upstream from the hydraulic valve 11. The control groove 20 connects the inlet duct 22 to a control duct 24 of the locking valve 17. When hydraulic fluid is introduced via the control duct 24 onto a pressure surface 25 of the spindle 19 of the locking valve 17, the spindle 19 is moved to a position, in which the locking valve 17 closes the fluid communication out of the hydraulic fluid chamber 12. When the locking valve 17 is moved towards the closed position and has prevented outflow from the hydraulic fluid chamber 12, it compresses the fluid in the hydraulic duct 14. The movement of the locking valve 17 thus increases pressure in the hydraulic fluid chamber 12. This ensures that the intake valves 1 are kept tightly closed. When the drive piston 7 is moved away from the input portion end of the pressurizing chamber 9, the fluid communication between the control groove 20 and the inlet duct 22 is cut. Instead, the control groove 20 is connected to a discharge duct 23. The control groove 20 connects the control duct 24 to the discharge duct 23, which allows the spindle 19 of the locking valve 17 to be moved by the force of the spring 18 to an open position. Outflow from the hydraulic fluid chamber 12 is thus allowed and the intake valve 1 can be opened.

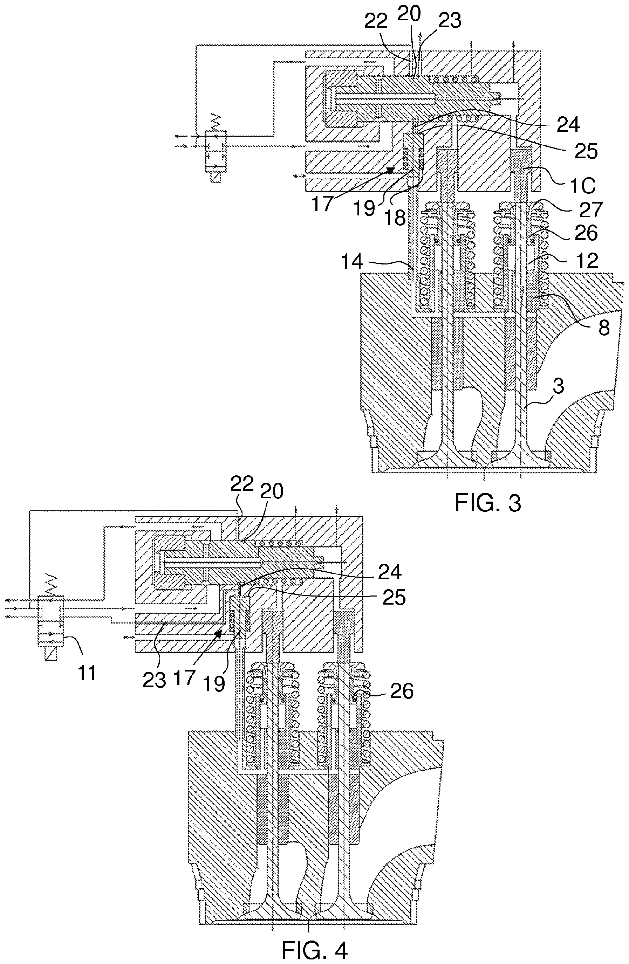

In figure 3 is shown a second embodiment of the invention. The operating principle of this embodiment is the same as in the embodiment of figures 1 and 2. The second embodiment differs from the first embodiment in that the locking piston is not integrated with the driven piston 1C that is used for opening the intake valve 1, but each intake valve 1 is provided with a separate locking piston 26. The locking piston 26 is arranged around the valve stem 3 below a valve rotator 27. The hydraulic fluid chamber 12 used for locking the intake valve 1 is arranged inside the valve guide 8. The hydraulic duct 14 is arranged partly inside the cylinder head 9 and the valve guide 8 for introducing hydraulic fluid into the hydraulic fluid chamber 12.

In the embodiment of figure 4, the locking pistons 26 are arranged around the valve stems 3 of the intake valves 1 in the same manner as in the embodiment of figure 3. Also the locking valve 17 is located in the same place as in the embodiments of figures 1 to 3. However, the locking valve 17 is controlled in a different way. The drive piston 7 is provided with a same kind of control groove 20 as in the embodiments of previous figures. When the drive piston 7 is at the input portion end of the pressurizing chamber 9, hydraulic pressure is applied onto the pressure surface 25 of the spindle 19 of the locking valve 17 via the inlet duct 22 and the control duct 24 and the spindle 19 is moved to the closed position. In the embodiment of figure 4, a different hydraulic valve 11 is used for controlling the opening and closing of the intake valves 1. The hydraulic valve 11 is also used for controlling the opening of the locking valve 17. A discharge duct 23 is connected to the control duct 24. The hydraulic valve 11 is provided with an additional port, to which the discharge duct 23 is connected. The hydraulic valve 11 has two positions. In a first position of the hydraulic valve 11, flow from an inlet duct 15 into the input portion 9A of the pressurizing chamber 9 is allowed and flow from the input portion 9a into an outlet duct 21 is prevented. In a second position of the hydraulic valve 11, flow from the inlet duct 15 into the input portion 9A of the pressurizing chamber 9 is prevented and flow from the input portion 9A into the outlet duct 21 is allowed. When the hydraulic valve 11 is in the second position, as shown in figure 4, flow through the additional port of the hydraulic valve 11 from the discharge duct 23 is prevented. In the first position of the hydraulic valve, flow through the additional port of the hydraulic valve 11 from the discharge duct 23 is allowed. Therefore, when the intake valves 1 are opened by moving the hydraulic valve 11 to the first position, the locking valve 17 is automatically opened and hydraulic fluid is released from the hydraulic fluid chambers 12. When the hydraulic valve 11 is switched to the second position and the drive piston 7 has returned to the input portion end of the pressurizing chamber 9, the locking valve 17 is automatically closed and the intake valves 1 are locked.

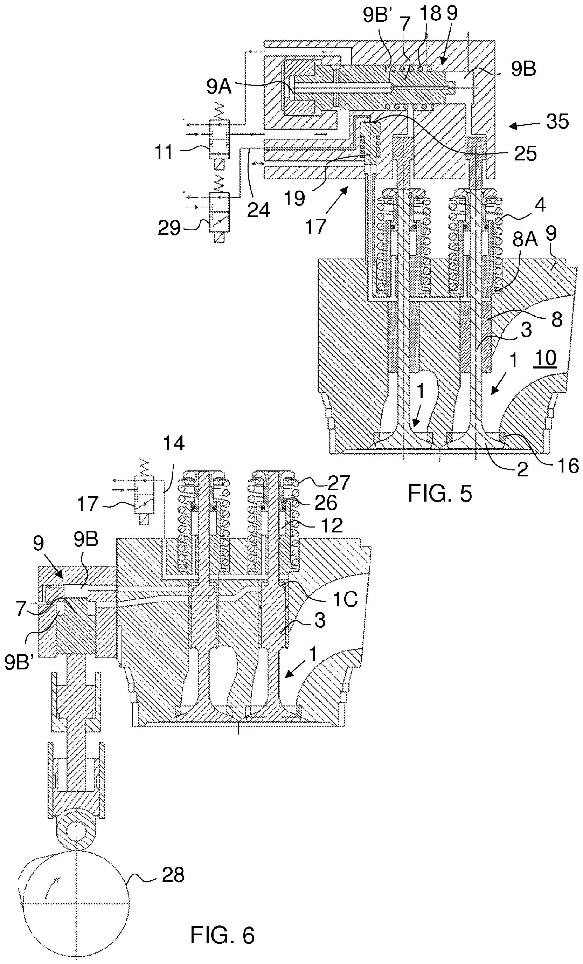

Figure 5 shows a fourth embodiment of the invention. This embodiment is similar to the embodiment of figure 4, but the locking valve 17 is controlled in a different way. The gas exchange valve arrangement is provided with a separate control valve 29, which controls flow of hydraulic fluid onto the pressure surface 25 of the spindle 19 of the locking valve 17. The control valve 29 has a first position, in which hydraulic fluid is introduced from a source of hydraulic fluid via a control duct 24 onto the pressure surface 25 of the spindle 19 of the locking valve 17, and a second position, in which hydraulic fluid is released through the control duct 24 so that the locking valve 17 can move to the open position. In the embodiment of the figure, the control valve 29 is electrically controlled, but it could also be pneumatically or hydraulically controlled.

In the embodiment of figure 6, the locking piston 26 is arranged around the valve stem 3 below the valve rotator 27 in the same manner as in figures 4 and 5. In figure 5, the intake valves 1 are cam-operated. However, the valve opening system is not completely mechanical, but a cam 28 is arranged to operate a drive piston 7, which pressurizes hydraulic fluid in a pressurizing chamber 9, which is divided into two output portions 9B, 9B' in the same way as in the embodiments of the preceding figures. Each intake valve 1 is provided with a driven piston 1C, which is arranged around the valve stem 3 for opening the intake valve 1. The locking valve 17 is in the embodiment of figure 6 an electrically controlled valve. The locking valve 17 has a first position, in which the locking valve 17 connects the hydraulic fluid chamber 12 to a source of hydraulic fluid for introducing hydraulic fluid into the hydraulic fluid chamber. In a second position of the locking valve 17, hydraulic fluid is released from the hydraulic fluid chamber 12. The locking valve 17 could also be hydraulically or pneumatically controlled.

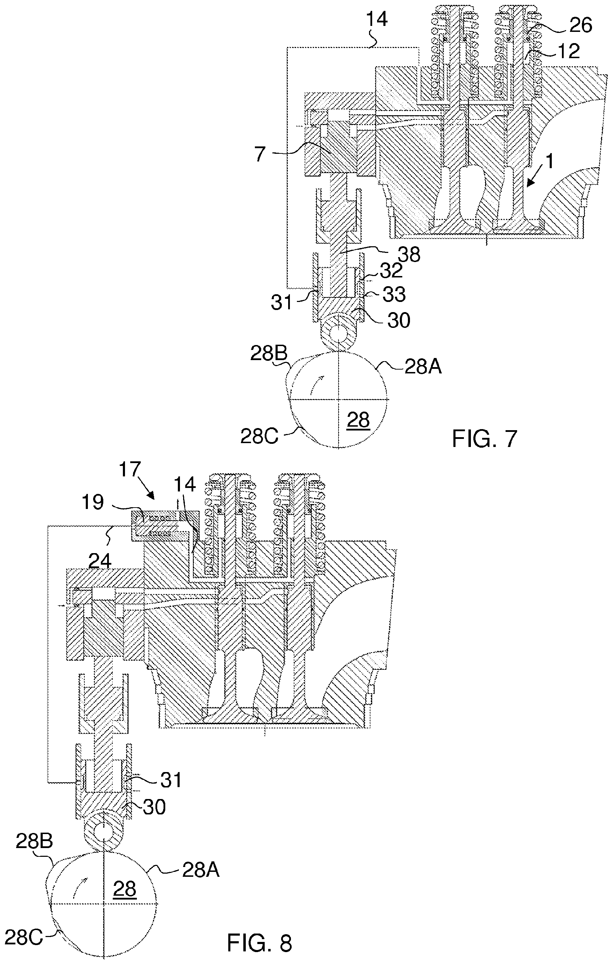

Figure 7 shows a gas exchange valve arrangement according to a sixth embodiment of the invention. In this embodiment, the intake valves 1 are cam-operated in the same way as in the embodiment of figure 6. The outflow from the hydraulic fluid chamber 12 is controlled by a cam follower 30, which is engaged with the cam 28. The cam 28 is provided with a base circle 28A, a lobe 28B, and a portion 28C that is arranged below the base circle 28A. The portion 28C below the base circle 28A follows the lobe 28B in the rotation direction of the cam 28. The cam follower 30 is provided with a control groove 31, which surrounds the outer surface of the cam follower 30. When the cam follower 30 is on the lobe 28B of the cam 28, the control groove 31 connects the hydraulic duct 14 with an outlet 32 for allowing outflow from the hydraulic fluid chamber 12. When the cam follower 30 enters the portion 28C below the base circle 28A, the control groove 31 connects the hydraulic duct 14 with a source of hydraulic fluid allowing filling of the hydraulic fluid chamber 12. When the cam follower 30 is engaged with the base circle 28A of the cam 28, flow in the hydraulic duct is prevented. The intake valve 1 is thus locked in its closed position. Instead of the cam follower 30, the control functions could be arranged in some other part of the force transmission means between the cam 28 and the intake valves 1. For instance, a push rod 28 between the cam follower 30 and the drive piston 7 could be provided with a control groove or similar means for controlling outflow from the hydraulic fluid chamber 12.

The embodiment of figure 8 is similar to the embodiment of figure 7. Also in this embodiment, the locking of the intake valves 1 is controlled by the cam follower 30. However, the control groove 31 does not directly control the flow into the hydraulic fluid chamber 12 and out of the chamber 12, but the control groove 31 is arranged to control the operation of a locking valve 17. The locking valve 17 has a similar construction as in the embodiments of figures 1 to 6. When the cam follower 30 is on the portion 28C below the base circle 28A of the cam 28, flow through a control duct 24 to the locking valve 17 is allowed and the spindle 19 of the locking valve 17 is moved to the closed position, in which outflow from the hydraulic fluid chamber 12 through the hydraulic duct 14 is prevented. When the cam follower 30 is on the base circle 28A of the cam 28, flow in the control duct 24 is prevented and the locking valve 17 is kept closed. When the cam follower 30 is engaged with the lobe 28B of the cam, hydraulic fluid is released from the locking valve 17 and the locking valve 17 is opened. Also the locking of the intake valves 1 is thus released.

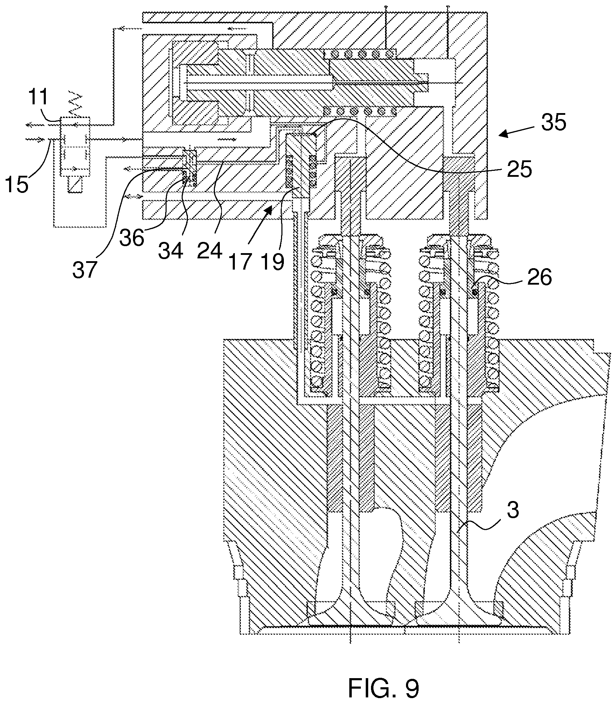

The construction of the gas exchange valve arrangement of figure 9 is similar to the embodiments of figures 1 to 5. The arrangement is provided with a locking valve 17, which is arranged in the hydraulic actuator 35. The arrangement comprises separate locking pistons 26, which are arranged around the valve stems 3 in the same way as in the embodiments of figures 3 to 5. The arrangement is further provided with a control valve 34 for controlling the operation of the locking valve 17. The control valve 34 has a first position, in which flow of hydraulic fluid in a control duct 24 onto the pressure surface 25 of the spindle 19 of the locking valve 17 is allowed. The hydraulic fluid is introduced to the locking valve 17 from the inlet duct 15 of the hydraulic actuator 35 from the upstream side of the hydraulic valve 11. In a second position, flow onto the pressure surface 25 of the spindle 19 is prevented. The control valve 34 comprises a spindle 37, which is kept in the first position by a spring 36. The control valve 34 is arranged in the hydraulic actuator 35 so that when the hydraulic valve 11 is switched to the position in which flow to the input portion 9A of the pressurizing chamber 9 is allowed, pressure on the downstream side of the hydraulic valve 11 can push the spindle 37 of the control valve 34 against the force of the spring 36 to the second position. Hydraulic fluid is thus discharged from the control duct 24 allowing opening of the locking valve 17 and the locking of the intake valves 1 is released. The control valve 34 works thus automatically.

It will be appreciated by a person skilled in the art that the invention is not limited to the embodiments described above, but may vary within the scope of the appended claims. For instance, the gas exchange valves could also be cam-operated without any hydraulic components. The actuating mechanism of the gas exchange valves could thus be provided with rocker arms and push rods. Instead of helical springs, for example pneumatic springs could be used for closing the gas exchange valves. Also, features from the different embodiments can be combined. For instance, the different positions of the locking piston can be used in combination with any method of controlling the outflow from the hydraulic fluid chamber.

## Claims

1. A gas exchange valve arrangement for a piston engine, which arrangement comprises
- a gas exchange valve (1),
- a helical spring (4) exerting a force on the gas exchange valve (1) for closing the valve (1),
- a driven piston (1C) that is attached to the gas exchange valve (1) for hydraulically opening the gas exchange valve (1),
- a hydraulic fluid chamber (12),
- a locking piston (1C, 26) that is provided with a piston surface (5A, 26A) delimiting the hydraulic fluid chamber (12), the locking piston (1C, 26) being mechanically connected to the gas exchange valve (1) such that opening movement of the gas exchange valve (1) moves the locking piston (1C, 26) in the direction which is from the locking piston (1C, 26) towards the hydraulic fluid chamber (12),
- means (14) for introducing hydraulic fluid into the hydraulic fluid chamber (12),
- and means (17, 30) for preventing outflow from the hydraulic fluid chamber (12) when the gas exchange valve (1) is closed for preventing unintentional opening of the gas exchange valve (1).

2. An arrangement according to claim 1, **characterized in that** the piston surface (5A, 26A) of the locking piston (1C, 26) faces towards the opening direction of the gas exchange valve (1).

3. An arrangement according to claim 1 or 2, **characterized in that** the locking piston (1C, 26) is attached directly to the gas exchange valve (1).

4. An arrangement according to any of the preceding claims, **characterized in that** the locking piston (1C, 26) is fixedly attached to the gas exchange valve (1).

5. An arrangement according to any of the preceding claims, **characterized in that** the means for preventing outflow from the hydraulic fluid chamber (12) comprise a locking valve (17), which is arranged to selectively prevent and allow flow in a hydraulic duct (14) that is connected to the hydraulic fluid chamber (12).

6. An arrangement according to claim 5, **characterized in that** the locking valve (17) is hydraulically controlled.

7. An arrangement according to claim 6, **characterized in that** the locking valve (17) is configured to increase pressure in the hydraulic fluid chamber (12) when the locking valve (17) is moved towards the closed position.

8. An arrangement according to claim 6 or 7, **characterized in that** the arrangement comprises a drive piston (7) for pressurizing hydraulic fluid for hydraulically opening the gas exchange valve (1), and the drive piston (7) is configured to control flow of hydraulic fluid to the locking valve (17) for controlling closing of the locking valve (17).

9. An arrangement according to any of claims 6 to 8, **characterized in that** the arrangement comprises a drive piston (7) for pressurizing hydraulic fluid for hydraulically opening the gas exchange valve (1), and the drive piston (7) is configured to control flow of hydraulic fluid from the locking valve (17) for controlling opening of the locking valve (17).

10. An arrangement according to claim 8, **characterized in that** the arrangement comprises a hydraulic valve (11, 34), which controls flow of hydraulic fluid from the locking valve (17) for controlling opening of the locking valve (17).

11. An arrangement according to claim 6 or 7, **characterized in that** the arrangement comprises a control valve (29) for controlling flow of hydraulic fluid to and from the locking valve (17) for controlling opening and closing of the locking valve (17).

12. An arrangement according to any of claims 1 to 4, **characterized in that** the gas exchange valve (1) is operated by a cam (28), and a cam follower (30) is configured to work as the means for preventing outflow from the hydraulic fluid chamber (12).

13. An arrangement according to claim 12, **characterized in that** the cam (28) comprises a base circle (28A), a lobe (28B) and a portion (28C) below the base circle (28A), and the cam follower (30) is configured to allow flow into the hydraulic fluid chamber (12) when the cam follower (30) is on the portion (28C) below the base circle (28A), allow outflow from the hydraulic fluid chamber (12) when the cam follower (30) is on the lobe (28B), and prevent flow into the hydraulic fluid chamber (12) and out of the hydraulic fluid chamber (12) when the cam follower (30) is on the base circle (28A) of the cam (28).

14. An arrangement according to any of claims 1 to 4, **characterized in that** the gas exchange valve is operated by a cam (28) and a cam follower (30) is configured to control opening and closing of a locking valve (17), which controls outflow from the hydraulic fluid chamber (12).

15. An arrangement according to any of the preceding claims, **characterized in that** the arrangement comprises a driven piston (1C) that is attached to the gas exchange valve (1) for hydraulically opening the gas exchange valve (1), and the locking piston is integrated with the driven piston (1C).

## Patentansprüche

1. Gaswechselventilanordnung für einen Kolbenmotor, wobei die Anordnung Folgendes umfasst:
- ein Gaswechselventil (1),
- eine Spiralfeder (4), die auf das Gaswechselventil (1) eine Kraft ausübt, um das Ventil (1) zu schließen,
- einen angetriebenen Kolben (1C), der an dem Gaswechselventil (1) angebracht ist, um das Gaswechselventil (1) hydraulisch zu öffnen,
- eine Hydraulikfluidkammer (12),
- einen Sperrkolben (1c, 26), der mit einer Kolbenfläche (5A, 26A) versehen ist, welche die Hydraulikfluidkammer (12) begrenzt, wobei der Sperrkolben (1c, 26) derart mechanisch mit dem Gaswechselventil (1) verbunden ist, dass eine Öffnungsbewegung des Gaswechselventils (1) den Sperrkolben (1c, 26) in die Richtung bewegt, die vom Sperrkolben (1c, 26) zur Hydraulikfluidkammer (12) führt,
- Mittel (14) zum Einführen von Hydraulikfluid in die Hydraulikfluidkammer (12),
- und Mittel (17, 30) zum Verhindern eines Ausströmens aus der Hydraulikfluidkammer (12), wenn das Gaswechselventil (1) geschlossen ist, um ein unbeabsichtigtes Öffnen des Gaswechselventils (1) zu verhindern.

2. Anordnung nach Anspruch 1, **dadurch gekennzeichnet, dass** die Kolbenfläche (5A, 26A) des Sperrkolbens (1c, 26) in die Öffnungsrichtung des Gaswechselventils (1) weist.

3. Anordnung nach Anspruch 1 oder 2, **dadurch gekennzeichnet, dass** der Sperrkolben (1c, 26) direkt am Gaswechselventil (1) angebracht ist.

4. Anordnung nach einem der vorhergehenden Ansprüche, **dadurch gekennzeichnet, dass** der Sperrkolben (1c, 26) fest am Gaswechselventil (1) angebracht ist.

5. Anordnung nach einem der vorhergehenden Ansprüche, **dadurch gekennzeichnet, dass** die Mittel zum Verhindern eines Ausströmens aus der Hydraulikfluidkammer (12) ein Sperrventil (17) umfassen, das dafür angeordnet ist, selektiv das Strömen in eine Hydraulikleitung (14) zu verhindern und zu gestatten, die mit der Hydraulikfluidkammer (12) verbunden ist.

6. Anordnung nach Anspruch 5, **dadurch gekennzeichnet, dass** das Sperrventil (17) hydraulisch gesteuert wird.

7. Anordnung nach Anspruch 6, **dadurch gekennzeichnet, dass** das Sperrventil (17) dafür gestaltet ist, einen Druck in der Hydraulikfluidkammer (12) zu erhöhen, wenn das Sperrventil (17) zur geschlossenen Position bewegt wird.

8. Anordnung nach Anspruch 6 oder 7, **dadurch gekennzeichnet, dass** die Anordnung einen Antriebskolben (7) umfasst, um Hydraulikfluid mit Druck zu beaufschlagen, um das Gaswechselventil (1) hydraulisch zu öffnen, und der Antriebskolben (7) dafür gestaltet ist, das Strömen von Hydraulikfluid zum Sperrventil (17) zu steuern, um das Schließen des Sperrventils (17) zu steuern.

9. Anordnung nach einem der Ansprüche 6 bis 8, **dadurch gekennzeichnet, dass** die Anordnung einen Antriebskolben (7) umfasst, um Hydraulikfluid mit Druck zu beaufschlagen, um das Gaswechselventil (1) hydraulisch zu öffnen, und der Antriebskolben (7) dafür gestaltet ist, das Strömen von Hydraulikfluid zum Sperrventil (17) zu steuern, um das Öffnen des Sperrventils (17) zu steuern.

10. Anordnung nach Anspruch 8, **dadurch gekennzeichnet, dass** die Anordnung ein Hydraulikventil (11, 34) umfasst, welches das Strömen von Hydraulikfluid vom Sperrventil (17) steuert, um das Öffnen des Sperrventils (17) zu steuern.

11. Anordnung nach Anspruch 6 oder 7, **dadurch gekennzeichnet, dass** die Anordnung ein Steuerventil (29) umfasst, um das Strömen von Hydraulikfluid zum und vom Sperrventil (17) zu steuern, um das Öffnen und Schließen des Sperrventils (17) zu steuern.

12. Anordnung nach einem der Ansprüche 1 bis 4, **dadurch gekennzeichnet, dass** das Gaswechselventil (1) durch eine Nockenscheibe (38) betrieben wird und ein Schlepphebel (30) dafür gestaltet ist, als das Mittel zum Verhindern eines Ausströmens aus der Hydraulikfluidkammer (12) zu wirken.

13. Anordnung nach Anspruch 12, **dadurch gekennzeichnet, dass** die Nockenscheibe (38) einen Grundkreis (28A), eine Nase (28B) und einen Abschnitt (28C) unterhalb des Grundkreises (28A) umfasst und der Schlepphebel (30) dafür gestaltet ist, ein Strömen in die Hydraulikfluidkammer (12) zu ermöglichen, wenn sich der Schlepphebel (30) auf dem Abschnitt (28C) unterhalb des Grundkreises (28A) befindet, ein Ausströmen aus der Hydraulikfluidkammer (12) zu ermöglichen, wenn sich der Schlepphebel auf der Nase (28B) befindet, und ein Strömen in die Hydraulikfluidkammer (12) und aus der Hydraulikfluidkammer (12) zu verhindern, wenn sich der Schlepphebel (30) auf dem Grundkreis (28A) der Nockenscheibe (28) befindet.

14. Anordnung nach einem der Ansprüche 1 bis 4, **dadurch gekennzeichnet, dass** das Gaswechselventil durch eine Nockenscheibe (28) betrieben wird und ein Schlepphebel (30) dafür gestaltet ist, das Öffnen und Schließen eines Sperrventils (17) zu steuern, welches das Ausströmen aus der Hydraulikfluidkammer (12) steuert.

15. Anordnung nach einem der vorhergehenden Ansprüche, **dadurch gekennzeichnet, dass** die Anordnung einen angetriebenen Kolben (1C) umfasst, der an dem Gaswechselventil (1) angebracht ist, um das Gaswechselventil (1) hydraulisch zu öffnen, und der Sperrkolben in den angetriebenen Kolben (1C) integriert ist.

## Revendications

1. Agencement de soupape d'échange de gaz pour un moteur à pistons, lequel agencement comprend
- une soupape d'échange de gaz (1),
- un ressort hélicoïdal (4) exerçant une force sur la soupape d'échange de gaz (1) pour fermer la soupape (1).
- un piston entraîné (1C) qui est fixé à la soupape d'échange de gaz (1) pour ouvrir la soupape d'échange de gaz (1) de façon hydraulique,
- une chambre de fluide hydraulique (12),
- un piston de verrouillage (1C, 26) qui est doté d'une surface de piston (5A, 26A) délimitant la chambre de fluide hydraulique (12), le piston de verrouillage (1C, 26) étant connecté mécaniquement à la soupape d'échange de gaz (1) de telle façon que le mouvement d'ouverture de la soupape d'échange de gaz (1) déplace le piston de verrouillage (1C, 26) dans la direction qui vient du piston de verrouillage (1C, 26) vers la chambre de fluide hydraulique (12),
- un moyen (14) d'introduction du fluide hydraulique dans la chambre de fluide hydraulique (12),
- et des moyens (17, 30) d'empêchement de l'écoulement à partir de la chambre de fluide hydraulique (12) lorsque la soupape d'échange de gaz (1) est fermée pour empêcher une ouverture non intentionnelle de la soupape d'échange de gaz (1) .

2. Agencement selon la revendication 1, **caractérisé en ce que** la surface de piston (25A, 26A) du piston de verrouillage (1C, 26) fait face à la direction d'ouverture de la soupape d'échange de gaz (1).

3. Agencement selon la revendication 1 ou 2, **caractérisé en ce que** le piston de verrouillage (1C, 26) est fixé directement à la soupape d'échange de gaz (1).

4. Agencement selon l'une quelconque des revendications précédentes, **caractérisé en ce que** le piston de verrouillage (1C, 26) est rattaché de manière fixe à la soupape d'échange de gaz (1).

5. Agencement selon l'une quelconque des revendications précédentes, **caractérisé en ce que** le moyen d'empêchement de l'écoulement à partir de la chambre de fluide hydraulique (12) comprend une soupape de verrouillage (17) qui est agencée pour empêcher et permettre de façon sélective l'écoulement dans une conduite hydraulique (14) qui est reliée à la chambre de fluide hydraulique (12).

6. Agencement selon la revendication 5, **caractérisé en ce que** la soupape de verrouillage (17) est à commande hydraulique.

7. Agencement selon la revendication 6, **caractérisé en ce que** la soupape de verrouillage (17) est configurée pour augmenter la pression dans la chambre de fluide hydraulique (12) lorsque la soupape de verrouillage (17) est déplacée en direction de la position fermée.

8. Agencement selon la revendication 6 ou 7, **caractérisé en ce que** l'agencement comprend un piston d'entraînement (7) pour comprimer du fluide hydraulique pour ouvrir la soupape d'échange de gaz (1) de façon hydraulique, et le piston d'entraînement (7) est configuré pour commander l'écoulement de fluide hydraulique vers la soupape de verrouillage (17) pour commander la fermeture de la soupape de verrouillage (17).

9. Agencement selon l'une quelconque des revendications 6 à 8, **caractérisé en ce que** l'agencement comprend un piston d'entraînement (7) pour comprimer du fluide hydraulique pour ouvrir la soupape d'échange de gaz (1) de façon hydraulique, et le piston d'entraînement (7) est configuré pour commander l'écoulement de fluide hydraulique à partir de la soupape de verrouillage (17) pour commander l'ouverture de la soupape de verrouillage (17).

10. Agencement selon la revendication 8, **caractérisé en ce que** l'agencement comprend une soupape hydraulique (11, 34) qui commande l'écoulement de fluide hydraulique à partir de la soupape de verrouillage (17) pour commander l'ouverture de la soupape de verrouillage (17) .

11. Agencement selon la revendication 6 ou 7, **caractérisé en ce que** l'agencement comprend une soupape de commande (29) pour commander l'écoulement du fluide hydraulique vers et à partir de la soupape de verrouillage (17) pour commander l'ouverture et la fermeture de la soupape de verrouillage (17).

12. Agencement selon l'une quelconque des revendications 1 à 4, **caractérisé en ce que** la soupape d'échange de gaz (1) est actionnée par une came (28) et un galet de came (30) est configuré pour fonctionner en tant que le moyen d'empêchement de l'écoulement à partir de la chambre de fluide hydraulique (12).

13. Agencement selon la revendication 12, **caractérisé en ce que** la came (28) comprend un cercle de base (28A), un lobe (28B) et une partie (28C) en-dessous du cercle de base (28A), et le galet de came (30) est configuré pour permettre l'écoulement jusque dans la chambre de fluide hydraulique (12) lorsque le galet de came (30) est sur la partie (28C) en-dessous du cercle de base (28A), permettre l'écoulement à partir de de la chambre de fluide hydraulique (12) lorsque le galet de came (30) est sur le lobe (28B) et empêcher l'écoulement jusque dans la chambre de fluide hydraulique (12) et hors de la chambre de fluide hydraulique (12) lorsque le galet de came (30) est sur le cercle de base (28A) de la came (28).

14. Agencement selon l'une quelconque des revendications 1 à 4, **caractérisé en ce que** la soupape d'échange de gaz est actionnée par une came (28) et un galet de came (30) est configuré pour commander l'ouverture et la fermeture d'une soupape de verrouillage (17) qui commande l'écoulement à partir de la chambre de fluide hydraulique (12).

15. Agencement selon l'une quelconque des revendications précédentes, **caractérisé en ce que** l'agencement comprend piston entraîné (1C) qui est fixé à la soupape d'échange de gaz (1) pour ouvrir la soupape d'échange de gaz (1) de façon hydraulique et le piston de verrouillage est intégré avec le piston entraîné (1C) .
